Europäisches Patentamt

European Patent Office

Office européen des brevets

(19)

(11) Publication number: **0 043 255**
**A1**

(12) # EUROPEAN PATENT APPLICATION

(21) Application number: **81302896.6**

(22) Date of filing: **26.06.81**

(51) Int. Cl.³: **B 05 B 1/02**
F 16 L 17/00, F 16 K 47/08
G 05 D 7/01

(30) Priority: **28.06.80 GB 8021289**

(43) Date of publication of application:
**06.01.82 Bulletin 82/1**

(84) Designated Contracting States:
**CH DE FR IT LI NL**

(71) Applicant: **DUNLOP LIMITED**
**Dunlop House Ryder Street St. James's**
**London SW1Y 6PX(GB)**

(72) Inventor: **Allen, William Thomas**
**54 Thorpe Street**
**Chase Terrace Walsall Staffs(GB)**

(72) Inventor: **Winchcombe, John Jeremy**
**15 Moorfield Drive**
**Sutton Coldfield West Midlands(GB)**

(74) Representative: **Waller, Roy Ernest Sykes et al,**
**Group Patent Department Dunlop Limited 2 Parade**
**Sutton Coldfield West Midlands B72 1PF(GB)**

(54) **Fluid flow emitter.**

(57) A pressure-compensating emitter for irrigation tubing comprising an insert 1 formed in one piece e.g. by injection moulding, and having a fluid passage 2 extending therethrough. The fluid passage 2 has a leakage aperture 13 which in use is positioned within an irrigation tube and is deformable in response to the hydrostatic pressure in the tube to provide a substantially constant leakage rate over a predetermined range of operating pressures. The passage 2 is relatively divergent in the direction of fluid flow to facilitate flushing at low fluid pressures to remove accumulated solid material.

FIG.1

EP 0 043 255 A1

## FLUID FLOW EMITTER

This invention concerns improvements in or relating to irrigation tubing and in particular to a pressure-compensating emitter for irrigation tubing.

In order to operate efficiently and minimise wastage of water and plant stress irrigation tubing is required to provide a substantially constant predetermined leakage rate over an operating fluid pressure range of typically between 10 and 40 p.s.i. so as to accommodate fluctuations in the fluid supply pressure or local variations due to hydrostatic pressure.

Pressure-compensating emitters are known comprising a flexible element held within a rigid casing which in turn is plugged into an aperture in the tube. The element is formed with an orifice the size of which changes with variation in the hydrostatic pressure in the tube so that a substantially constant leakage rate is obtained over a range of fluid pressures. The body of the emitter is outside the tube and is therefore susceptible to damage during assembly and subsequent handling of the tube, for example when the tube is pulled into position over the surface or when the tube is buried. As a result such known emitters frequently function incorrectly and require replacement, and are relatively expensive.

The invention as claimed is intended to remedy the aforementioned drawbacks of the known emitters. It solves the problem of providing an emitter which controls the leakage rate over a predetermined range of operating pressures without being susceptible to damage during assembly and use and which is easy to manufacture by utilising a construction in which the emitter comprises a one-piece insert of elastomeric material adapted to be located in an opening in an irrigation tube so as to project therein, the insert having a fluid passage extending therethrough to permit flow of fluid from the tube through the emitter and the fluid passage having a fluid leakage aperture which in use is within the tube and is deformable in response to the hydrostatic pressure in the tube to vary the cross-sectional area of the aperture to provide a substantially constant leakage rate over a predetermined range of operating pressures.

Preferably the fluid leakage aperture comprises an elongate slit or slot at one end of the fluid passage. Preferably the ratio length:width of the slit or slot is ⩾ 3:1 and more preferably still ⩾ 10:1.

The slit or slot may be constructed so as to close completely at pressures greater than the range of operating pressures in which case the tube wall is preferably provided with additional openings of relatively small size which are non-pressure compensating and provide limited leakage at high pressures.

More preferably the slot or slit is constructed so as to remain slightly open at pressures greater than the range of operating pressures to provide such limited leakage. For example one or both of the opposed peripheral lip portions of the fluid passage defining the slit or slot may be formed with cut-outs which define a relief opening of fixed size when the lip portions defining the slit or slot contact one another.

In one preferred construction the relief opening is formed by a channel of constant cross-section extending the length of the fluid passage.

Preferably the fluid passage is relatively divergent in the direction of fluid flow to facilitate flushing at pressures below the range of operating pressures and prevent blockage of the fluid passage.

Conveniently the insert is formed with an annular groove in the outer surface thereof in which the surrounding portion of the tube wall defining the opening in the tube wall is received to secure the insert to the tube wall. Preferably the groove is formed adjacent to one end of the insert so that the major portion of the insert is contained within the tube and the insert projects only slightly above the outer surface of the tube wall which therefore remains substantially smooth.

The insert may be formed from any elastomer which is substantially inert to the fluids to be dispensed. Suitable elastomers are conventional cured elastomers such as SBR and EPDM compounds, silicone rubber, and thermoplastics such as plasticised PVC, ethylene vinyl acetate (EVA), high green strength ethylene propylene terpolymer (EPDM), block copolymers of styrene and butadiene and styrene and ethylene-butene, and poly-propylene/ethylene propylene terpolymer (PP/EPDM) blends.

Preferably the elastomer of the insert has a hardness in the range Shore 30A to 50D and more preferably in the range 35A to 80A Shore depending on the shape of the insert and the operating pressure range.

According to a further aspect of the present invention we provide an irrigation tube having at least one opening in the tube wall thereof in which a pressure-compensating emitter according to the first aspect of the present invention is located.

The invention will now be described in more detail, by way of example only, with reference to the accompanying drawings in which:-

       Figure 1 is a front elevation of a pressure compensating emitter according to the present invention;

       Figure 2 is a side elevation of the emitter shown in Figure 1;

       Figure 3 is a view in the direction of arrow A of Figure 1;

       Figures 4a, 4b and 4c are side views, to an enlarged scale, of part of the emitter shown in Figure 2 illustrating the variation in effective length of the relief channel with operating pressure, and

       Figure 5 is a graph showing the operating characteristics of the emitter shown in Figures 1 to 4.

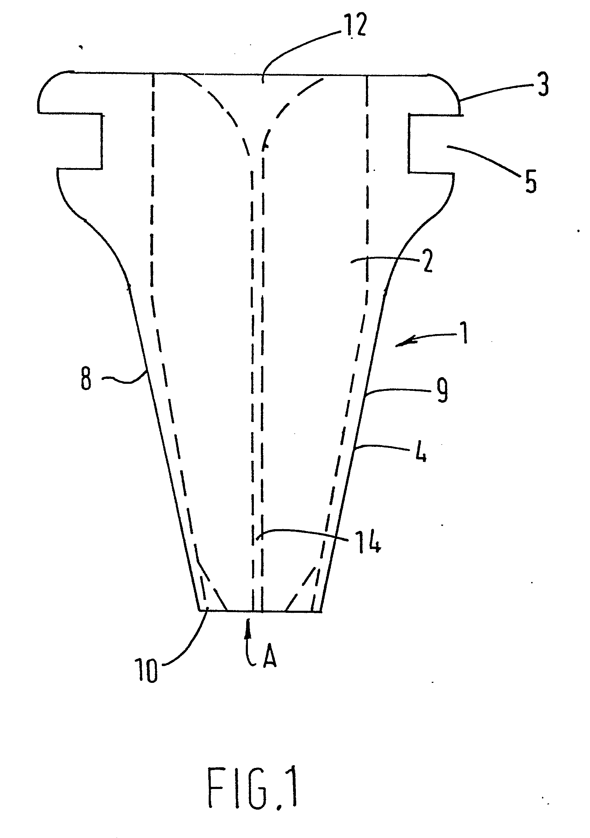

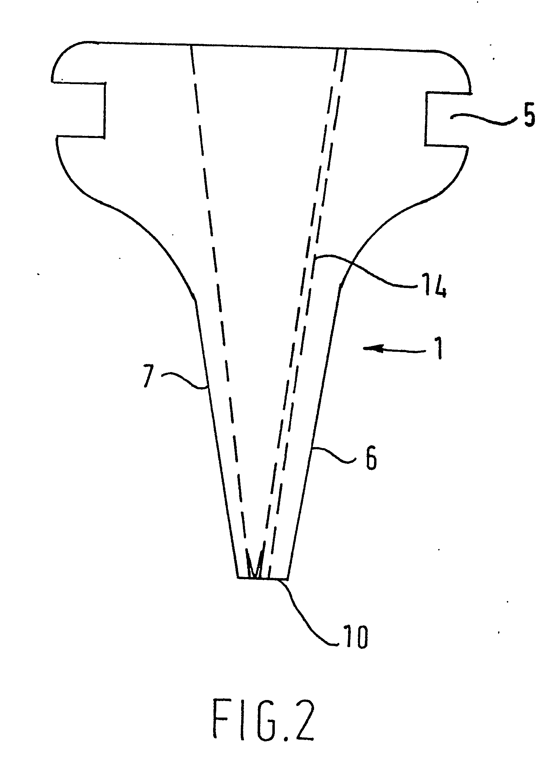

The pressure-compensating emitter shown in Figures 1 to 4 of the accompanying drawings comprises an insert 1 formed from a PP/EPDM blend with a Shore A hardness of 57°, for example by injection moulding, having a fluid passage 2 extending therethrough.

The insert 1 has an annular head portion 3 and a tapered body portion 4. The head portion 3 is formed with an annular groove 5 in the outer surface thereof in which the peripheral portion of an opening formed in the wall of an irrigation tube (not shown) is located to secure the insert 1 to the tube. The body portion 4 comprises two opposed generally flat sidewall portions 6,7 and two opposed generally flat end wall portions 8,9 which define a rectangular base 10.

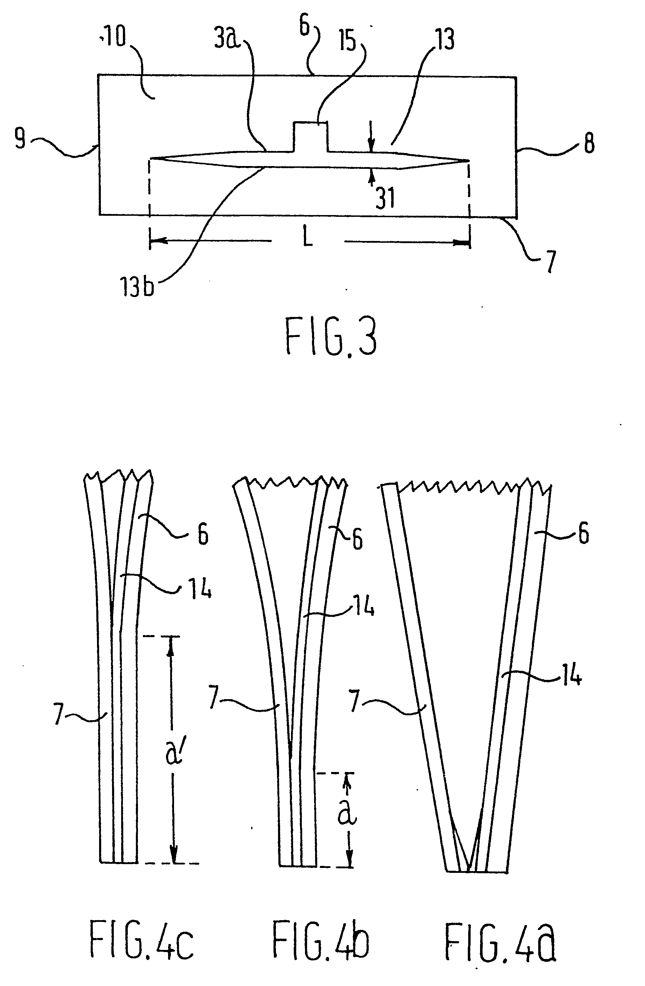

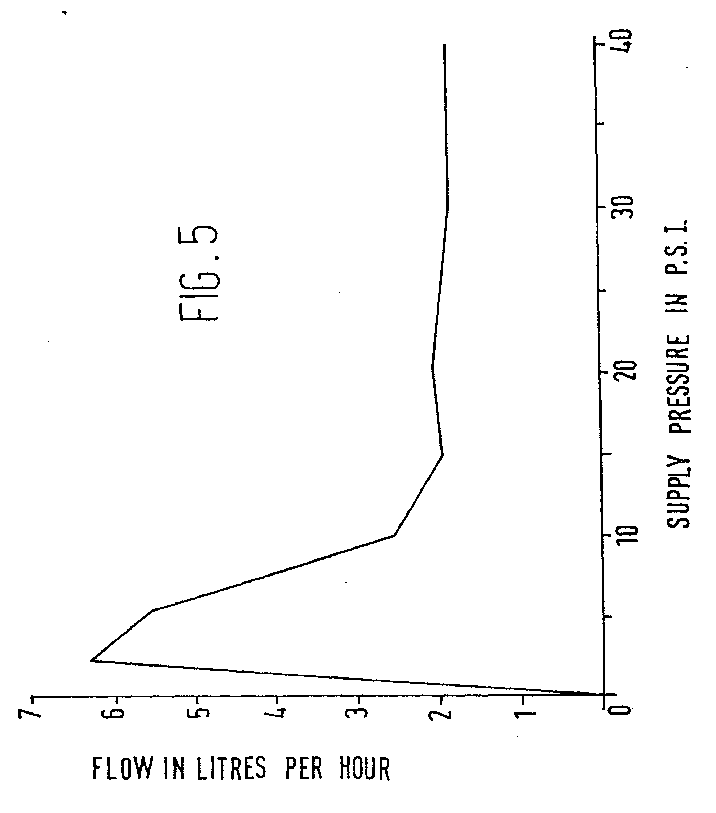

The fluid passage 2 extends between an inlet 11 at one end of the insert and an outlet 12 at the other end and is relatively divergent in the direction of fluid flow from the inlet 11 towards the outlet 12. The inlet 11 shown in more detail in Figure 3 comprises an elongate slit 13 formed in the base 10 extending parallel to the sidewalls 6,7 and having a length (l) to width (w) ratio of 20:1. The opposed lip portions 13a,13b of the slit are deformable to vary the cross-sectional area of the slit in response to hydrostatic pressure acting on the sidewalls 6,7 of the insert body portion 4 to provide a substantially constant leakage rate through the passage 2 over an operating pressure range of 10 to 40 p.s.i. (Figure 5). Additionally the fluid passage 2 is formed with a generally square section cut-out in one sidewall which extends the length of the fluid passage and defines a relief channel 14 of uniform cross-sectional area. The relief channel 14 defines an opening 15 which remains open to allow limited leakage when the lip portions 13a,13b contact one another to close slit 13 at hydrostatic pressures above the operating range.

The cross-sectional area of the channel 14 and opening 15 definedthereby is substantially independent of the operating pressure but the effective length of the channel varies with the operating pressure. More particularly as shown in Figures 4a, 4b and 4c the effective length a (Figure 4b), a' (Figure 4c) of the channel 14 increases as the contact area of the sidewalls 6,7 increases with increase in operating pressure.

Operation of the emitter is as follows, an irrigation tube (not shown) formed with a plurality of openings spaced relative to one another along the length of the tube is provided with a respective insert 1 located in each opening so that the body portion 4 of each insert 1 is positioned inside the tube and the flat sidewall portions 6,7 are subjected to the hydrostatic pressure of the fluid in the tube. With the tube un-pressurised the slit 13 of each insert 1 is fully open. On pressurising the tube, fluid flowing through the tube leaks out through the fluid passage 2 of each insert, the leakage rate being determined by the cross-sectional area of the slit 13 and the effective length $\underline{a},\underline{a}'$ of the relief channel 14 both of which are controlled by the fluid pressure acting on the flat sidewall portions 6,7 of the body portion of the tube.

As shown in Figure 5 at low fluid pressures the leakage rate increases with increase in the fluid pressure up to 2 p.s.i. at which point further increase in the fluid pressure results in a greater reduction in the cross-sectional area of the slit 13 and the leakage rate decreases until at 10 p.s.i., an equlibrium position is reached at which the effects of reduction in cross-sectional area of the slit 13 and increase in the fluid pressure are balanced and the leakage rate remains substantially constant up to 40 p.s.i. At higher pressures the lip portions 13$\underline{a}$, 13$\underline{b}$ contact one another so that the slit 13 substantially closes and limited leakage is obtained by the fluid flow through the relief channel 14.

It will be apparent from the foregoing that the above described emitter not only provides a substantially constant leakage rate over a range of operating pressures but also ensures that at higher pressures limited leakage is maintained while at lower pressures the leakage rate increases to a maximum, preferably three times the constant leakage rate, enabling the fluid passage to be flushed thereby removing any accumulated solid material tending to block the passage, this flushing action being facilitated by the relatively divergent configuration of the fluid passage in the direction of fluid flow.

The invention is not restricted to the above described embodiment for example the profile of the slit 13 may be varied according to the throughput requirements, operating pressure range and hardness of the material used to form the insert 1, for example the slit may be rectangular. Furthermore the insert may be formed without a relief channel as described and the tube itself formed with a plurality of non-pressure compensating apertures additional to the apertures in which the emitters are received to provide limited leakage.

In addition to ease of manufacture the emitter of the present invention has other advantages over the aforedescribed known emitters, in particular in use the major portion of the insert is located inside the tube so that the outer surface of the tube remains substantially smooth and risk of damage to the emitter or the crop as the tube is dragged over the ground surface is considerably reduced. Furthermore by locating the major portion of the insert within the tube the rigid outer case required to house the pressure-compensating components of the known exteriorly mounted emitters is dispensed with.

Claims:

1.    A pressure-compensating emitter for irrigation tubing characterised in that the emitter comprises a one-piece insert (1) of elastomeric material adapted to be located in an opening in an irrigation tube so as to project therein, the insert (1) having a fluid passage (2) extending therethrough to permit flow of fluid through the emitter and a fluid leakage aperture (13) which in use is within the tube and is deformable in response to the hydrostatic pressure in the tube to vary the cross-sectional area of the aperture (13) to provide a substantially constant leakage rate over a predetermined range of operating pressures.

2.    An emitter according to claim 1 characterised in that the fluid leakage aperture (13) includes a relief opening (15) to provide limited leakage at pressures above the predetermined range of operating pressures.

3.    An emitter according to claim 2 characterised in that the relief opening (15) comprises a cut-out extending into the wall portion (13a) defining the fluid leakage aperture (13).

4.    An emitter according to claim 3 characterised in that the cut-out comprises a channel (14) extending the length of the fluid passage (2).

5.    An emitter according to claim 4 characterised in that the channel (14) is of uniform cross-section along its length.

6.    An emitter according to claim 4 or claim 5 characterised in that the effective length ($a,a'$) of the channel (14) varies with the operating pressure.

7.    An emitter according to any one of the preceding claims characterised in that the fluid leakage aperture (13) is constructed to provide a leakage rate greater than said constant leakage rate at pressures below the predetermined range of operating pressures.

8.    An emitter according to any one of the preceding claims characterised in that the fluid passage (2) is relatively divergent in the direction of fluid flow.

**0043255**

9. An emitter according to any one of the preceding claims characterised in that the fluid leakage aperture (13) comprises an elongate slit (13).

10. An emitter according to claim 9 characterised in that the length (1) to width (w) ratio of said slit (13) is at least 3:1 and more preferably at least 10:1.

11. An emitter according to any one of the preceding claims characterised in that the insert (1) comprises a head portion (3) having an annular groove (5) for locating and retaining the emitter in an opening in an irrigation tube and a body portion (4) which is tapered from the head portion (3) towards the base (10) thereof and the fluid leakage aperture (13) is provided in the base (10).

12. An emitter according to claim 11 characterised in that the body portion (4) has a pair of opposed generally flat sidewalls (6,7) and the fluid leakage aperture (13) extends generally parallel to the sidewalls.

13. An emitter according to any one of the preceding claims characterised in that the emitter is formed from an elastomer having a hardness in the range Shore 30A to 50D and more preferably in the range Shore 35A to 80A.

FIG.1

FIG.2

FIG.3

FIG.4c  FIG.4b  FIG.4a

FIG.5

FLOW IN LITRES PER HOUR

SUPPLY PRESSURE IN P.S.I.

4/4

0043255

0043255

Application number

EP 81302896.6

## European Patent Office

## EUROPEAN SEARCH REPORT

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| X | US – A – 4 190 206 (ATKINSON)  <br> * Claim 1; fig. 1-11 * | 1-13 | B 05 B 1/02 <br> F 16 L 17/00 <br> F 16 K 47/08 <br> G 05 D 7/01 |
| P | US – A – 4 228 956 (VARNER) <br> (21-10-1980) <br> * Claim 1; fig. 1,3 * <br> & FR-A1-2 417 341 (14-09-1979) | 1 | |
| A | US – A – 4 129 324 (JONES) <br> * Totality * | 1 | TECHNICAL FIELDS SEARCHED (Int. Cl.3) |
| X | US – A – 2 941 544 (PERAS) <br> * Totality * | 1 | B 05 B 1/00 <br> B 05 B 7/00 <br> F 16 L 37/00 |
| A | US – A – 3 027 098 (HELMER) <br> * Totality * | 1 | F 16 L 41/00 <br> F 16 K 3/00 <br> F 16 K 47/00 |
| A | DE – C – 599 989 (KLOTZ) <br> * Totality * | 1 | G 05 D 7/00 |

| X | The present search report has been drawn up for all claims |
|---|---|

| Place of search | Date of completion of the search | Examiner |
|---|---|---|
| VIENNA | 10-09-1981 | FUCHS |

EPO Form 1503.1  06.78